# EUROPEAN PATENT APPLICATION

(11) **EP 4 636 473 A1**
(43) Date of publication of application: **22.10.2025**
(21) Application number: 23917901.3
(22) Date of filing: 15.12.2023
(51) Int. Cl.: G03B 5/00, G03B 13/20, G03B 3/00, G03B 17/12, H04N 23/55, G01S 17/08, G01S 17/86

(54) **ELECTRONIC DEVICE, METHOD, AND NON-TRANSITORY COMPUTER-READABLE STORAGE MEDIUM FOR ADJUSTING LOCATION OF LENS ASSEMBLY ON BASIS OF DATA INDICATING RELIABILITY, OBTAINED BY USING LASER SENSOR**

(30) Priority: 20.01.2023 KR 20230009088; 31.01.2023 KR 20230013047
(71) Applicant: Samsung Electronics Co., Ltd., Suwon-si, Gyeonggi-do 16677 (KR)
(72) Inventor: KIM, Sungeun, Suwon-si Gyeonggi-do 16677 (KR); LEE, Sehyun, Suwon-si Gyeonggi-do 16677 (KR); CHOI, Gwangho, Suwon-si Gyeonggi-do 16677 (KR); KIM, Eunho, Suwon-si Gyeonggi-do 16677 (KR)
(74) Representative: Gulde & Partner
(86) International application number: PCT/KR2023/020823
(87) International publication number: WO 2024/154949

(57) **Abstract**

An electronic device according to an embodiment may identify a first distance related to the intensity of reflected light of a laser beam by using a laser sensor in a first state, which outputs the laser beam. The electronic device may identify a threshold distance related to the intensity of ambient light heading towards the laser sensor, by using the laser sensor in a second state different from the first state. The electronic device may identify a second distance related to an image by using the image obtained from a camera module. The electronic device may obtain a reliability of the first distance by using the first distance and the threshold distance. The electronic device may control a lens assembly of the camera module on the basis of the reliability equal to or less than a threshold reliability, to adjust a location of the lens assembly.

## Description

### [Technical Field]

Various embodiments of the present disclosure relate to an electronic device, a method, and a non-transitory computer-readable storage medium for adjusting a position of a lens assembly based on data indicating a reliability obtained using a laser sensor.

### [Background Art]

An electronic device may identify a distance from an external object or a space through a laser sensor. The electronic device may determine whether to use a long-distance camera or a short- distance camera based on the identified distance from the external object. The laser sensor may include a depth sensor, a time of flight (TOF) sensor, a ranging sensor, or a light detection and ranging (Lidar).

### [Disclosure]

### [Technical Solution]

According to an embodiment, in an electronic device, the electronic device may comprise a camera module including a lens assembly, a laser sensor, and a processor. The processor may, using the laser sensor in a first state outputting laser light, identify a first distance related to intensity of reflected light for the laser light. The processor may, using the laser sensor in a second state different from the first state, identify a threshold distance related to intensity of ambient light directed to the laser sensor. The processor may, using an image obtained from the camera module, identify a second distance related to the image. The processor may obtain a reliability for the first distance using the first distance and the threshold distance. The processor may, based on the reliability less than or equal to a threshold reliability, adjust a position of the lens assembly using the second distance by controlling the lens assembly of the camera module.

According to an embodiment, in a method of an electronic device, the method may comprise, using a laser sensor in a first state outputting laser light, identifying a first distance related to intensity of reflected light for the laser light. The method may comprise, using the laser sensor in a second state different from the first state, identifying a threshold distance related to intensity of ambient light directed to the laser sensor. The method may comprise, using image obtained from a camera module, identifying a second distance related to the image. The method may comprise obtaining a reliability for the first distance using the first distance and the threshold distance. The method may comprise, based on the reliability less than or equal to a threshold reliability, adjusting a position of the lens assembly using the second distance by controlling a lens assembly of a camera module.

According to an embodiment, in a non-transitory computer-readable storage medium storing one or more programs, the one or more programs, when executed by a processor of an electronic device, may, using a laser sensor in a first state outputting laser light, identify a first distance related to intensity of reflected light for the laser light. The one or more programs, when executed by the processor of the electronic device, may, using the laser sensor in a second state different from the first state, identify a threshold distance related to intensity of ambient light directed to the laser sensor. The one or more programs, when executed by the processor of the electronic device, may, using an image obtained from the camera module, identify a second distance related to the image. The one or more programs, when executed by a processor of an electronic device, may obtain a reliability for the first distance using the first distance and the threshold distance. The one or more programs, when executed by the processor of the electronic device, may be configured to, based on the reliability less than or equal to a threshold reliability, adjust a position of the lens assembly using the second distance by controlling the lens assembly of the camera module.

### [Description of the Drawings]

FIG. 1 is a block diagram of an electronic device in a network environment according to various embodiments.
FIG. 2 is a block diagram illustrating a camera module according to various embodiments.
FIG. 3 illustrates an example of a block diagram of an electronic device according to an embodiment.
FIG. 4 illustrates an example of an operation in which an electronic device according to an embodiment identifies a reliability corresponding to a distance to an external object.
FIG. 5 illustrates an example of an operation in which an electronic device adjusts a lens assembly according to an embodiment.
FIG. 6 illustrates an exemplary flowchart indicating an operation of an electronic device according to an embodiment.

### [Mode for Invention]

Hereinafter, various embodiments of the present document will be described with reference to an attached drawing.

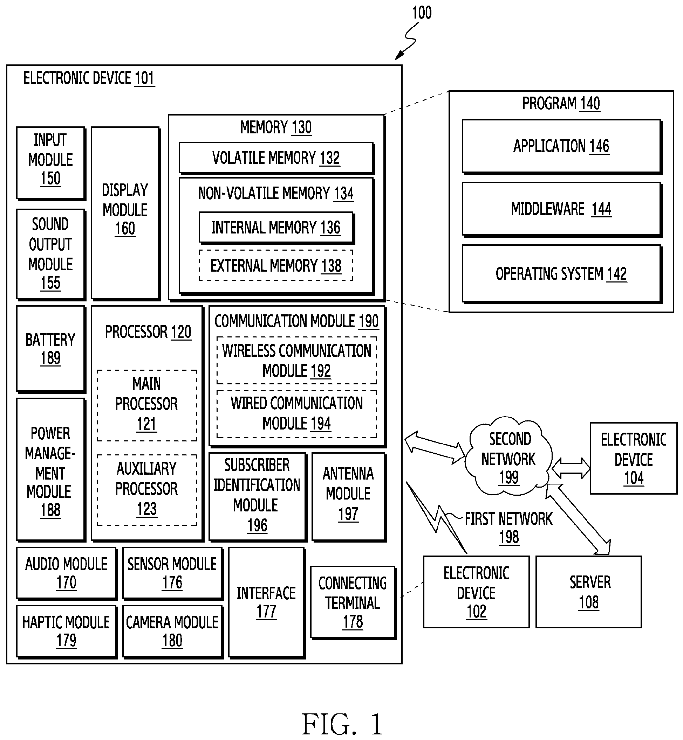

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

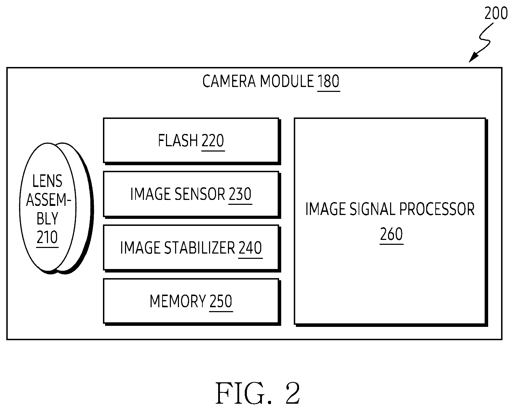

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

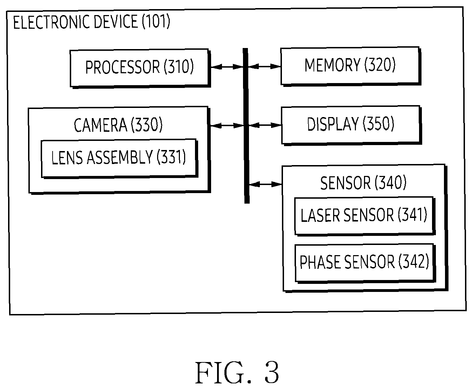

FIG. 3 illustrates an example of a block diagram of an electronic device according to an embodiment. Referring to FIG. 3, according to an embodiment, an electronic device 101 may include at least one of a processor 310, memory 320, a camera 330, a sensor 340, or a display 350. The processor 310, the memory 320, the camera 330, the sensor 340, and the display 350 may be electronically and/or operably coupled with each other by an electronical component such as a communication bus. Hereinafter, hardware being operably coupled may mean that a direct connection or an indirect connection between the hardware is established by wire or wirelessly so that second hardware among the hardware is controlled by first hardware. Although illustrated based on different blocks, an embodiment is not limited thereto, and a portion (e.g., at least a portion of the processor 310, the memory 320, and communication circuitry (not illustrated)) of the hardware of FIG. 3 may be included in a single integrated circuit such as a system on a chip (SoC). A type and/or the number of hardware components included in the electronic device 101 is not limited as illustrated in FIG. 3. For example, the electronic device 101 may include only some of the hardware components illustrated in FIG. 3. The electronic device 101 may include the electronic device 101 of FIG. 1.

According to an embodiment, the processor 310 of the electronic device 101 may include a hardware component for processing data based on one or more instructions. Hardware components for processing data may include, for example, an arithmetic and logic unit (ALU), a floating point unit (FPU), a field programmable gate array (FPGA), a central processing unit (CPU), and/or an application processor (AP). The number of the processor 310 may be one or more. For example, the processor 310 may have a structure of a multi-core processor such as a dual core, a quad core, or a hexa core. The following operations may be performed by the processor 310. The processor 310 may include the processor 120 of FIG. 1.

According to an embodiment, the memory 320 of the electronic device 101 may include a hardware component for storing data and/or an instruction inputted and/or outputted to the processor 310. The memory 320 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM) erasable PROM (EPROM), electrically erasable PROM (EEPROM), flash memory, a hard disk, a compact disk, solid state drive (SSD), and embedded multi media card (eMMC). The memory 320 may include the memory 130 of FIG. 1.

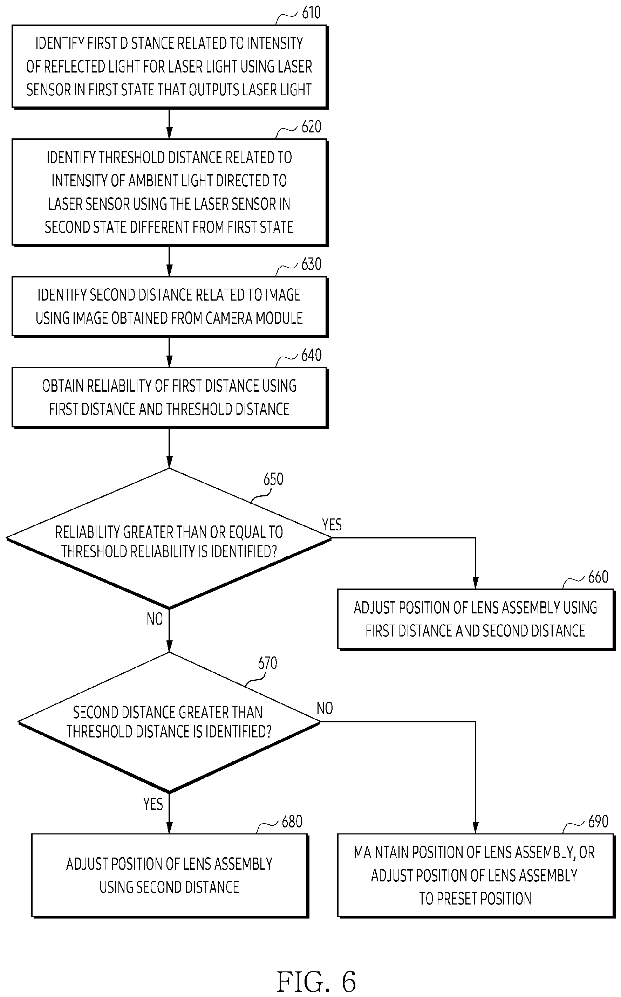

According to an embodiment, in the memory 320 of the electronic device 101, one or more instructions (or commands) indicating a calculation and/or an operation to be performed by the processor 310 on data may be stored. A set of one or more instructions may be referred to as firmware, an operating system, a process, a routine, a sub-routine and/or an application. For example, the electronic device 101 and/or the processor 310 may perform at least one of operations of FIG. 6 when a set of a plurality of instructions distributed in a form of an operating system, firmware, a driver, and/or an application is executed. Hereinafter, the application being installed in the electronic device 101 may mean that one or more instructions provided in a form of an application are stored in the memory 320 of the electronic device 101, and the one or more applications are stored in an executable format (e.g., a file having a preset extension by an operating system of the electronic device 101) by the processor 310 of the electronic device 101.

According to an embodiment, the camera 330 of the electronic device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors in the camera 330 may be disposed in a form of a 2 dimensional array. The camera 330 may generate an image including a plurality of pixels that correspond to light reaching light sensors in the 2 dimensional array and are arranged in the 2 dimensions by obtaining electrical signals of each of a plurality of the light sensors substantially simultaneously. For example, photo data captured using the camera 330 may mean an image obtained from the camera 330. For example, video data captured using the camera 330 may mean a sequence of a plurality of images obtained from the camera 330 according to a preset frame rate. The camera 330 may include the camera module 180 of FIG. 1 and/or the camera module 180 of FIG. 2. A lens assembly 331 may include the lens assembly 210 of FIG. 2.

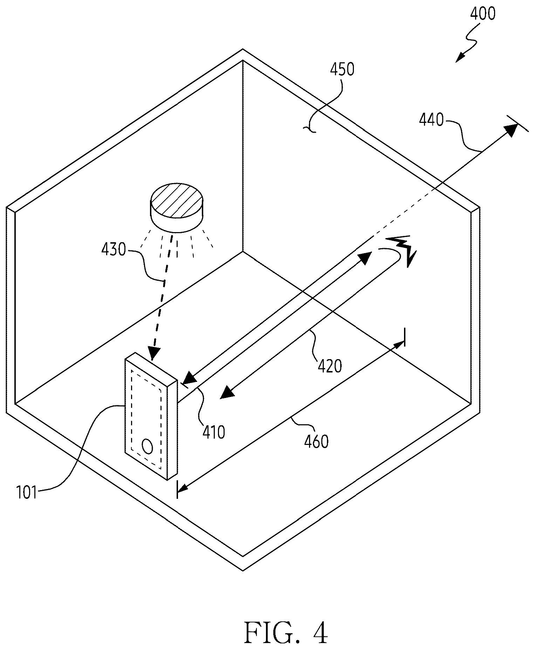

According to an embodiment, the electronic device 101 may obtain a first image using the lens assembly 331 of the camera 330. The first image may be obtained based on a first focal length between the electronic device 101 and at least one subject corresponding to the first image. The electronic device 101 may change the first focal length to a second focal length based on information indicating a distance between the electronic device 101 and the at least one subject. The electronic device 101 may obtain a second image, which is clearer than the first image, corresponding to the at least one subject by controlling the lens assembly based on the changed second focal length. An operation in which the electronic device 101 obtains information indicating the distance will be described later with reference to FIGS. 4 to 5.

According to an embodiment, the sensor 340 of the electronic device 101 may generate electronic information that may be processed by the processor 310 and/or the memory 320 of the electronic device 101 from non-electronic information related to the electronic device 101. The information may be referred to as sensor data. The sensor 340 may include a global positioning system (GPS) sensor for detecting a geographic location of the electronic device 101, an image sensor, an illumination sensor and/or a time-of-flight (ToF) sensor, and an inertial measurement unit (IMU) for detecting a physical motion of the electronic device 101.

According to an embodiment, the electronic device 101 may identify a distance from the electronic device 101 to an external object using a laser sensor 341. For example, the electronic device 101 may identify intensity of reflected light for laser light outputted from the laser sensor 341. The reflected light may mean laser light in which the laser light outputted from the laser sensor 341 is reflected by the external object. The electronic device 101 may identify the distance based on the intensity of the reflected light. The electronic device 101 may identify the distance using a time period from a moment when the laser light is outputted to a moment when the reflected light is received.

For example, the electronic device 101 may identify a confidence value for the distance based on the intensity of the reflected light. The electronic device 101 may identify a lower reliability as intensity of the identified reflected light becomes weaker. A case that the intensity of the reflected light is weak may include a case that the amount (intensity) of the reflected light is low. A case that the intensity of the reflected light may not be measured (e.g., in case that the intensity is zero) may mean that an external object is absent in a range in which the electronic device 101 may measure a distance using the laser sensor 341.

For example, a maximum value of a distance that the electronic device 101 may identify using the laser sensor 341 may be changed based on intensity of ambient light. For example, The electronic device 101 may identify the intensity of the ambient light directed to the laser sensor 341 by using the laser sensor 341 in a first state that outputs laser light and a second state different from the first state. The second state may include a state in which laser light is not outputted using the laser sensor 341. The electronic device 101 may set the maximum value based on intensity of infrared light included in the ambient light. For example, the electronic device 101 may identify the intensity of the ambient light of the electronic device 101 using the laser sensor 341 independently of identifying a state of the laser sensor 341. The set maximum value may be referred to as a threshold distance. For example, the electronic device 101 may identify whether to use information on the obtained distance using the laser sensor 341 by using a reliability for the distance. An operation of identifying whether the electronic device 101 may use the information on the distance by using the reliability will be described later in FIG. 4.

For example, the electronic device 101 may identify the ambient light and/or the infrared light using a photosensitive cell included in the laser sensor 341. The photosensitive cell may include a material in which a chemical change is made based on receiving light. The electronic device 101 may identify the ambient light and/or the infrared light by identifying the chemical change. For example, a maximum value of a distance set by the electronic device 101 in a state of identifying relatively strong intensity of an infrared ray may be greater than a maximum value of a distance set in a state of identifying relatively weak intensity of an infrared ray. However, it is not limited thereto. For example, the laser sensor 341 may be referred to at least one of a depth sensor, a range sensor, a light detection and ranging (LiDAR) sensor, or a radar sensor.

According to an embodiment, the electronic device 101 may obtain a first image and a second image in which at least one of pixels included in the at least one image is different based on receiving at least one image through the lens assembly 331. The electronic device 101 may identify a phase difference between the first image and the second image using a phase sensor 342.

For example, the electronic device 101 may obtain the first image and the second image by masking at least a portion of pixels included in an image sensor (e.g., the image sensor 230 of FIG. 2). The electronic device 101 may identify a distance of each of first pixels included in the first image and second pixels included in the second image, corresponding to each of the first pixels, and a position disposed in the second image. The electronic device 101 may obtain a phase difference between the first image and the second image based on identifying the distance and the position. The electronic device 101 may identify data on a distance to the at least one image, mapped to data indicating the phase difference, based on obtaining the phase difference. As an example, the electronic device 101 may identify a focal length for the at least one image based on a phase detection auto focus (PDAF). However, it is not limited thereto. For example, the electronic device 101 may obtain a phase difference corresponding to the at least one image by using an angle of at least one pixel (e.g., a green pixel) among RGB pixels included in the image sensor. Each of the RGB pixels may include a plurality of photodiodes. One or more sub-images represented in the at least one image may be identified using each of a plurality of regions (e.g., a left side, a right side, a top side, and a bottom side) of each RGB pixel using the plurality of photodiodes. The electronic device 101 may obtain a focal length corresponding to the at least one image using a phase difference between the one or more sub-images.

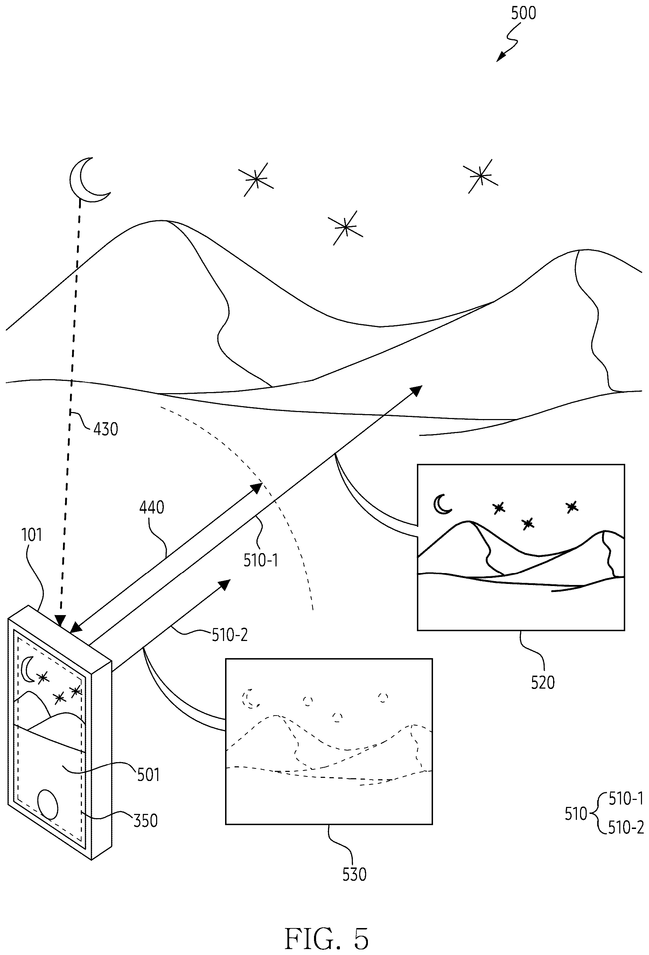

The electronic device 101 may identify distance data corresponding to the phase difference based on identifying the phase difference. For example, the distance data may include information corresponding to the phase difference and/or information corresponding to a contrast for the at least one image. For example, the image sensor 230 of FIG. 2 may include the phase sensor 342. The electronic device 101 may obtain a phase difference for a video while obtaining information on the video using the image sensor 230 including the phase sensor 342. The electronic device 101 may obtain one or more images by adjusting at least one of the pixels included in the image sensor. The electronic device 101 may identify a phase signal corresponding to each of the obtained one or more images by using the phase sensor 342. The electronic device 101 may obtain a phase difference by using the identified phase signal. An operation of controlling the lens assembly 331 using the obtained distance data based on the electronic device 101 identifying the phase difference will be described later in FIG. 5.

According to an embodiment, the display 350 of the electronic device 101 may output visualized information to a user. For example, the display 350 may output the visualized information to the user by being controlled by the processor 310 and/or a graphic processing unit (GPU) (not illustrated). The display 350 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED).

As described above, according to an embodiment, the electronic device 101 may identify a focal length corresponding to the at least one image while receiving at least one image (e.g., a preview image) using the camera 330. For example, the electronic device 101 may use a first distance related to a distance obtained using the laser sensor 341 and/or a second distance related to a phase obtained using the phase sensor 342 to identify the focal length. The electronic device 101 may identify a focal length for controlling the lens assembly 331 by comparing the first distance and/or the second distance. The electronic device 101 may change the at least one image based on identifying the focal length. The electronic device 101 may decrease a blur phenomenon that may occur while changing the at least one image based on identifying the focal length by comparing the first distance and/or the second distance.

FIG. 4 illustrates an example of an operation in which an electronic device according to an embodiment identifies a reliability corresponding to a distance to an external object. An electronic device 101 of FIG. 4 may include the electronic device 101 of FIGS. 1 to 3. Referring to FIG. 4, according to an embodiment, an exemplary state 400 for the electronic device 101 to identify a reliability of a distance between the electronic device 101 and an external object 450 using the laser sensor 341 of FIG. 3 is illustrated. As an example, the external object 450 may mean a subject such as a plane based on one color.

In the state 400 according to an embodiment, the electronic device 101 according to an embodiment may identify a distance for the external object 450 using a laser sensor (e.g., the laser sensor 341 of FIG. 3) while receiving image information using a camera (e.g., the camera 330 of FIG. 3). For example, the electronic device 101 may identify ambient light 430 using a laser sensor of a first state that outputs laser light and a second state different from the first state. The electronic device 101 may identify a threshold distance 440 indicating a maximum value of a measurable distance using the laser sensor, based on intensity of the ambient light 430.

For example, the electronic device 101 may output laser light 410 directed to the external object 450 using the laser sensor, based on identifying the threshold distance 440. For example, the electronic device 101 may output the laser light 410 directed to a point of the external object 450 based on a preset period using the laser sensor. The preset period may be set by the electronic device 101 and/or a user of the electronic device 101. The electronic device 101 may receive reflected light 420 in which the laser light 410 is reflected by the external object 450 using the laser sensor. The electronic device 101 may identify a distance 460 between the electronic device 101 and the external object 450 based on identifying a time at which the reflected light 420 is received and/or intensity of the reflected light 420. For example, the electronic device 101 may obtain data indicating a confidence value for the distance 460 based on identifying the distance 460.

For example, the data indicating the confidence value may include information indicating the confidence value and the distance 460. The data may be obtained based on preset bits (e.g., 16 bits). For example, the electronic device 101 may encode a reliability in at least one bit (e.g., three bits) of the preset bits. The reliability may be classified based on preset levels (e.g., 8 levels). For example, a first level (e.g., a level 0) among the preset levels may correspond to a first reliability (e.g., 100%). A second level (e.g., a level 1) among the preset levels may correspond to a second reliability (e.g., fail). A third level (e.g., a level 2) among the preset levels may correspond to a third reliability (e.g., 14%). A fourth level (e.g., a level 3) among the preset levels may correspond to a fourth reliability (e.g., 28%). A fifth level (e.g., a level 4) among the preset levels may correspond to a fifth reliability (e.g., 43%). A sixth level (e.g., a level 5) among the preset levels may correspond to a sixth reliability (e.g., 57%). A seventh level (e.g., a level 6) among the preset levels may correspond to a seventh reliability (e.g., 71%). An eighth level (e.g., a level 7) among the preset levels may correspond to an eighth reliability (e.g., 86%). However, it is not limited thereto. Operations in which the electronic device 101 identifies a reliability corresponding to the distance 460 may vary.

According to an embodiment, the electronic device 101 may determine whether to use information indicating the distance 460 by identifying a reliability classified by the preset level.

For example, the electronic device 101 may identify validity of data indicating a reliability. The electronic device 101 may identify the validity according to whether the laser light 410 outputted from a laser sensor identifies the reflected light 420 reflected by the external object 450. For example, the electronic device 101 may judge an error in the data indicating the reliability based on identifying the validity.

For example, in case that the electronic device 101 identifies intensity of the reflected light 420 less than or equal to preset threshold intensity (e.g., in case that the distance 460 is farther than the threshold distance 440), the electronic device 101 may obtain a reliability (e.g., fail) corresponding to the second level. However, it is not limited thereto. For example, as the intensity of the reflected light 420 identified by the electronic device 101 decreases, the reliability may decrease. As a distance between the electronic device 101 and the external object 450 increases, the reliability may decrease. The electronic device 101 may identify the validity of the data indicating the reliability based on identifying a reliability distinguished from the reliability (e.g., fail) corresponding to the second level among the preset levels.

According to an embodiment, the electronic device 101 may judge whether to use the distance 460 in controlling a lens assembly based on identifying the validity. The electronic device 101 may control the lens assembly based on a distance identified using a phase sensor to be described later based on identifying the reliability (e.g., fail) based on the second level (e.g., level 1). For example, the electronic device 101 may identify whether the reliability is greater than a threshold reliability (e.g., approximately 40%) based on identifying a preset level different from the second level. The threshold reliability may be changed by the electronic device 101 and/or the user of the electronic device 101.

According to an embodiment, in case that a reliability is greater than the threshold reliability is identified, the electronic device 101 may control the lens assembly based on a distance identified using the phase sensor and the distance 460 corresponding to the reliability. For example, the distance identified using the phase sensor may mean a moving distance for changing a position of the lens assembly included in the electronic device 101. For example, the electronic device 101 may adjust a focal length related to a camera based on controlling the lens assembly based on the distance 460. The electronic device 101 may improve a speed for adjusting the focal length by using the distance 460. As an example, the electronic device 101 may adjust the position of the lens assembly using a distance identified using the phase sensor and the distance 460 corresponding to the reliability among the distance 460 corresponding to the reliability. However, it is not limited thereto. The electronic device 101 may adjust the position of the lens assembly based on a phase auto focus (AF) and/or a contrast auto-focus. An operation of adjusting the position of the lens assembly using the phase auto focus and the contrast auto-focus by the electronic device 101 will be described later in FIG. 5.

According to an embodiment, the electronic device 101 may compare the threshold distance 440 and the identified distance using the phase sensor based on identifying a reliability less than or equal to the threshold reliability. An operation of comparing the identified distance using the threshold distance 440 and the phase sensor by the electronic device 101 will be described later in FIG. 5. Although not illustrated, an exemplary state for identifying a reliability less than or equal to the threshold reliability may include a state in which the electronic device 101 identifies information on a distance 460 is greater than the threshold distance 440. For example, the electronic device 101 may adjust the position of the lens assembly based on the identified distance using the laser sensor, independently of adjusting the position of the lens assembly using the phase sensor based on the identification of a reliability greater than the threshold reliability. In other words, in case that the electronic device 101 identifies a reliability that is less than or equal to the threshold reliability, the electronic device 101 may adjust the position of the lens assembly using the identified distance using the phase sensor. However, it is not limited thereto.

As described above, according to an embodiment, the electronic device 101 may identify a reliability for the distance 460 obtained using the laser sensor. The reliability may decrease as the distance 460 between the external object 450 and the electronic device 101 increases. The electronic device 101 may adjust a focus of the camera by controlling the lens assembly based on the distance 460 corresponding to a first reliability in a state of identifying the first reliability greater than the threshold reliability. The electronic device 101 may determine whether to control the lens assembly using the distance obtained by the phase sensor in a state of identifying a second reliability less than or equal to the threshold reliability.

When photographing a large space, such as a dark environment, a beach, a lake, and/or grass, the electronic device 101 may determine whether to use the distance obtained by the phase sensor using data indicating the reliability obtained using the laser sensor. The electronic device 101 may more accurately obtain a focal length corresponding to the external object identified using the camera by determining whether to use the distance using the data.

FIG. 5 illustrates an example of an operation in which an electronic device adjusts a lens assembly according to an embodiment. An electronic device 101 of FIG. 5 may include the electronic device 101 of FIG. 1 and the electronic device 101 of FIG. 4. Referring to FIG. 5, according to an embodiment, an exemplary state 500 is illustrated for identifying whether the electronic device 101 may use information on a distance 510. Hereinafter, it is assumed that at least one external object does not exist in a threshold distance 440 from the electronic device 101 in the state 500 according to an embodiment. For example, the threshold distance 440 may indicate a maximum value of a measurable distance using a laser sensor (e.g., the laser sensor 341 of FIG. 3) included in the electronic device 101 based on intensity of ambient light 430.

According to an embodiment, in the state 500, the electronic device 101 may display a preview image 501 on a display 350 using a camera (e.g., the camera 330 of FIG. 3). For example, the preview image 501 may include an image representing a landscape such as a beach, a lake, a grass, and a mountain.

For example, the electronic device 101 may obtain the preview image 501 based on a distance greater than the threshold distance 440. For example, the electronic device 101 may obtain the threshold distance 440 based on identifying the intensity of the ambient light 430 using the laser sensor (e.g., the laser sensor 341 of FIG. 3). The electronic device 101 may identify a distance based on the outputted laser light using the laser sensor. The electronic device 101 may identify that data indicating a reliability for the distance is valid. The distance may correspond to a reliability less than a threshold reliability (e.g., approximately 40%). The distance may correspond to another reliability distinguished from the reliability corresponding to the second level of FIG. 4.

According to an embodiment, the electronic device 101 may identify a phase difference for the preview image 501 using a phase sensor (e.g., the phase sensor 342 of FIG. 3) while obtaining the preview image 501 using the camera. The electronic device 101 may identify a distance 510 related to a phase, mapped to the phase difference, based on identifying of the phase difference. For example, the distance 510 may be determined by a mapping table for the phase difference. The distance 510 may be related to a contrast corresponding to the preview image 501.

According to an embodiment, the electronic device 101 may identify a distance 510-2 less than the threshold distance 440. In case that the electronic device 101 adjusts a position of the lens assembly of the camera based on the distance 510-2, the electronic device 101 may display a screen 530 based on a second focal length different from the first focal length corresponding to the preview image 501 on a display. While the electronic device 101 adjusts the position of the lens assembly based on the second focal length, the screen 530 including a blur may be displayed. In order to prevent the display of the screen 530 including the blur, the electronic device 101 may maintain or change the position of the lens assembly in its current state based on identifying the distance 510-2 less than the threshold distance 440. The changed position of the lens assembly may include a preset position set by the electronic device 101 to obtain the preview image 501. For example, the electronic device 101 may change the position of the lens assembly to the preset position based on identifying the distance 510-2 less than the threshold distance 440. However, it is not limited thereto.

According to an embodiment, the electronic device 101 may obtain a distance 510-1 greater than the threshold distance 440 by using a phase sensor (e.g., the phase sensor 342 of FIG. 3). The electronic device 101 may change a position of the lens assembly, based on the distance 510-1, based on obtaining the distance 510-1 greater than the threshold distance 440. The electronic device 101 may display a clearer screen 520 than the preview image 501 on the display 350 based on the changed position of the lens assembly.

For example, the electronic device 101 may change the position of the lens assembly based on a phase auto focus (AF) and/or a contrast auto focus. However, it is not limited thereto. An operation in which the electronic device 101 matches a focus corresponding to an image obtained through the camera by adjusting the position of the lens assembly may vary.

For example, the electronic device 101 may change the position of the lens assembly based on the distance 510-1 while displaying a plurality of frame images including the preview image 501 using the camera. For example, the electronic device 101 may sequentially change the position of the lens assembly to a position corresponding to the distance 510-1 based on the contrast auto focus. The electronic device 101 may identify a contrast of each of the plurality of frame images obtained using the camera while changing the position of the lens assembly. The electronic device 101 may identify whether the changed position of the lens assembly is a suitable position for photographing a landscape based on identifying the contrast. As an example, among the plurality of frame images, a contrast corresponding to a frame image obtained based on the changed position of the lens assembly may be a largest value.

For example, the electronic device 101 may change the position of the lens assembly to the position corresponding to the distance 510-1 based on the phase auto focus. The electronic device 101 may identify a phase difference corresponding to the screen 520 obtained based on the changed position of the lens assembly. As an example, in case that a distance corresponding to the phase difference identified by the electronic device 101 is the same as the distance 510, the electronic device 101 may identify that the position of the changed lens assembly is a suitable position.

As described above, according to an embodiment, the electronic device 101 may judge whether to use information on the distance 510 obtained using the phase sensor based on data (e.g., data indicating a reliability of a distance) obtained using the laser sensor. For example, the electronic device 101 may decrease noise included in a preview image (e.g., the preview image 501) to be displayed on the display 350 by adjusting the position of the lens assembly using the distance 510 based on the data. The electronic device 101 may more accurately obtain a focal length corresponding to an image (e.g., an image representing a plane composed of a beach, a sky, or one color) that is relatively difficult to identify the phase difference by judging whether to use the information on the distance 510 using the data obtained using the laser sensor.

FIG. 6 illustrates an exemplary flowchart indicating an operation of an electronic device according to an embodiment. An electronic device 101 of FIG. 6 may include the electronic device 101 of FIGS. 1 to 5. At least one of an operations of FIG. 6 may be performed by the electronic device 101 of FIG. 3 and/or the processor 310 of FIG. 3. Each of the operations of FIG. 6 may be performed sequentially, but is not necessarily performed sequentially. For example, an order of each of the operations may be changed, and at least two operations may be performed in parallel.

Referring to FIG. 6, according to an embodiment, in an operation 610, the electronic device may identify a first distance related to intensity of reflected light for laser light using a laser sensor in a first state that outputs the laser light. The electronic device may identify the intensity of the reflected light (e.g., the reflected light 420 of FIG. 4) for the laser light (e.g., the laser light 410 of FIG. 4) using the laser sensor (e.g., the laser sensor 341 of FIG. 3).

Referring to FIG. 6, in an operation 620, according to an embodiment, the electronic device may identify a threshold distance related to intensity of ambient light directed to the laser sensor using the laser sensor in the second state different from the first state. The electronic device may identify the threshold distance (e.g., the threshold distance 440 of FIG. 4) based on identifying the intensity of the ambient light (e.g., the ambient light 430 of FIG. 4). The threshold distance may mean a maximum value of a distance measurable by the electronic device using the laser sensor in a state of identifying the intensity of the ambient light.

Referring to FIG. 6, according to an embodiment, the electronic device may identify a second distance related to an image using the image obtained from a camera module in an operation 630. The electronic device may obtain a distance (e.g., the distance 510 of FIG. 5) based on identifying a phase difference for the image using the phase sensor 342 of FIG. 4.

Referring to FIG. 6, according to an embodiment, the electronic device may obtain a reliability of the first distance using the first distance and the threshold distance in an operation 640. The electronic device 101 may identify the reliability of the first distance (e.g., the distance 460 of FIG. 4) based on identifying intensity of reflected light (e.g., the reflected light 420 of FIG. 4). The electronic device may identify validity of the first distance using data indicating the reliability. The electronic device may judge an error (e.g., in case that the reliability corresponding to the second level of FIG. 4 is identified) for the data indicating the reliability based on identifying the validity. Hereinafter, it is assumed that the electronic device does not identify an error in the data (e.g., in case that the reliability corresponding to the second level of FIG. 4 is identified).

Referring to FIG. 6, in an operation 650, according to an embodiment, the electronic device may judge whether a reliability greater than or equal to a threshold reliability is identified. According to an embodiment, the electronic device may adjust the position of the lens assembly using the first distance and the second distance in an operation 660 in case that the reliability greater than or equal to the threshold reliability is identified (the operation 650-YES). As an example, the electronic device may change a position of the lens assembly to a position corresponding to the first distance among the first distance and the second distance. Data indicating the position of the lens assembly mapped to the first distance and the second distance may be different from data indicating a position of the lens assembly mapped to the first distance between the first distance and the second distance. For example, in case that adjusting the position of the lens assembly using the first distance and the second distance, the electronic device may set the position of the lens assembly mapped to the first distance and the second distance. For example, in case that the second distance is not identified, the electronic device may adjust the position of the lens assembly using mapping data corresponding to the first distance.

In case that a reliability less than the threshold reliability is identified (the operation 650-NO), according to an embodiment, the electronic device may judge whether the second distance greater than the threshold distance is identified in an operation 670. Hereinafter, a state for judging whether the electronic device identifies the second distance may be referred to the state 500 of FIG. 5.

In case that the second distance greater than the threshold distance is identified (the operation 670-YES), according to an embodiment, the electronic device may adjust the position of the lens assembly using the second distance in an operation 680. The second distance greater than the threshold distance may be referred to the distance 510-1 of FIG. 5. The electronic device may obtain the clearer screen 520 of FIG. 5 than the preview image 501 of FIG. 5 by adjusting the position of the lens assembly to a position corresponding to the second distance. The electronic device may adjust the position of the lens assembly to the position corresponding to the second distance based on the phase auto focus and/or the contrast auto focus.

According to an embodiment, in case of identifying the second distance less than or equal to the threshold distance (the operation 670-NO), in an operation 690, the electronic device may maintain the position of the lens assembly, or adjust the position of the lens assembly to a preset position. For example, the electronic device may identify a phase difference corresponding to a preview image obtained through the camera after maintaining the position of the lens assembly or adjusting the position of the lens assembly to the preset position.

According to an embodiment, the electronic device may perform the operation 610 based on adjusting the position of the lens assembly in the operation 660, the operation 680, or the operation 690. For example, the electronic device may perform the operation 610 based on a request for an operation of adjusting a preset period or a lens assembly.

According to an embodiment, the electronic device may identify whether to use distance information obtained using the phase sensor based on data obtained using the laser sensor. A method for comparing the data obtained by the electronic device using the laser sensor and the distance information obtained using the phase sensor may be required.

As described above, according to an embodiment, in an electronic device 101, the electronic device may comprise a camera module 180 including a lens assembly 210 or 331, a laser sensor 341, and a processor 310 and memory 130 storing instructions. The instructions, when executed by the processor, may cause the electronic device to, using the laser sensor in a first state outputting laser light 410, identify a first distance 460 related to intensity of reflected light 420 for the laser light. The instructions, when executed by the processor, may cause the electronic device to, using the laser sensor in a second state different from the first state, identify a threshold distance 440 related to intensity of ambient light 430 directed to the laser sensor. The instructions, when executed by the processor, may cause the electronic device to, using an image 501 obtained from the camera module, identify a second distance 510 related to the image. The instructions, when executed by the processor, may cause the electronic device to obtain a reliability for the first distance using the first distance and the threshold distance. The instructions, when executed by the processor, may cause the electronic device to, based on the reliability less than or equal to a threshold reliability, adjust a position of the lens assembly using the second distance by controlling the lens assembly of the camera module.

For example, the instructions, when executed by the processor, may cause the electronic device to, based on identifying the second distance greater than the threshold distance, adjust the position of the lens assembly using the second distance.

For example, the instructions, when executed by the processor, may cause the electronic device to, based on identifying the second distance less than the threshold distance, maintain the position of the lens assembly.

For example, the instructions, when executed by the processor, may cause the electronic device to, based on identifying the second distance less than the threshold distance, adjust the position of the lens assembly to a preset position.

For example, the instructions, when executed by the processor, may cause the electronic device to, based on identifying the reliability greater than the threshold reliability, adjust the position of the lens assembly using the first distance and the second distance.

For example, the instructions, when executed by the processor, may cause the electronic device to, based on the intensity of the reflected light corresponding to the first distance less than the threshold distance, obtain the reliability.

For example, the instructions, when executed by the processor, may cause the electronic device to, based on identifying the intensity of the ambient light, identify the threshold distance indicating a maximum value of the first distance measurable using the laser sensor.

For example, the instructions, when executed by the processor, may cause the electronic device to, using the first image that is the image, obtain a second image in which at least one of pixels included in the first image is changed. The instructions, when executed by the processor, may cause the electronic device to identify the second distance based on identifying a phase difference between the first image and the second image.

As described above, according to an embodiment, in a method of an electronic device, the method may comprise, using a laser sensor 341 in a first state outputting laser light 410, identifying a first distance 460 related to intensity of reflected light 420 for the laser light. The method may comprise, using the laser sensor in a second state different from the first state, identifying a threshold distance 440 related to intensity of ambient light 430 directed to the laser sensor. The method may comprise, using image 501 obtained from a camera module 180, identifying a second distance related to the image. The method may comprise obtaining a reliability for the first distance using the first distance and the threshold distance. The method may comprise, based on the reliability less than or equal to a threshold reliability, adjusting a position of the lens assembly using the second distance by controlling a lens assembly 210 or 331 of a camera module.

For example, the adjusting the position of the lens assembly may comprise, based on identifying the second distance greater than the threshold distance, adjusting the position of the lens assembly using the second distance.

For example, the adjusting the position of the lens assembly of the camera module may comprise, based on identifying the second distance less than the threshold distance, maintaining the position of the lens assembly.

For example, the adjusting the position of the lens assembly of the camera module may comprise, based on identifying the second distance less than the threshold distance, adjusting the position of the lens assembly to a preset position.

For example, the adjusting the position of the lens assembly of the camera module may comprise, based on identifying the reliability greater than the threshold reliability, adjusting the position of the lens assembly using the first distance and the second distance.

For example, the obtaining the reliability may comprise, based on the intensity of the reflected light corresponding to the first distance less than the threshold distance, obtaining the reliability.

For example, identifying the threshold distance may comprise, based on identifying the intensity of the ambient light, identifying the threshold distance indicating a maximum value of the first distance measurable using the laser sensor.

As described above, according to an embodiment, in a non-transitory computer-readable storage medium storing one or more programs, the one or more programs, when executed by a processor 310 of an electronic device 101, may, using the laser sensor in a first state outputting laser light 410, identify a first distance 460 related to intensity of reflected light 420 for the laser light. The one or more programs, when executed by the processor of the electronic device, may, using the laser sensor in a second state different from the first state, identify a threshold distance 440 related to intensity of ambient light 430 directed to the laser sensor. The one or more programs, when executed by the processor of the electronic device, may, using the image 501 obtained from the camera module 180, identify a second distance 510 related to the image. The one or more programs, when executed by the processor of the electronic device, may obtain a reliability for the first distance using the first distance and the threshold distance. The one or more programs, when executed by the processor of the electronic device, may cause the electronic device to, based on the reliability less than or equal to a threshold reliability, adjust a position of the lens assembly 210 or 331 using the second distance by controlling the lens assembly of the camera module.

For example, the one or more programs, when executed by the processor of the electronic device, may cause the electronic device to adjust the position of the lens assembly of the camera module, based on identifying the second distance greater than the threshold distance, adjust the position of the lens assembly using the second distance.

For example, the one or more programs, when executed by the processor of the electronic device, may cause the electronic device to, based on identifying the second distance less than the threshold distance, maintain the position of the lens assembly.

For example, the one or more programs, when executed by the processor of the electronic device, may cause the electronic device to, based on identifying the second distance less than the threshold distance, adjust the position of the lens assembly to a preset position.

For example, the one or more programs, when executed by the processor of the electronic device, may cause the electronic device to, based on identifying the reliability greater than the threshold reliability, adjust the position of the lens assembly using the first distance and the second distance.

For example, the one or more programs, when executed by the processor of the electronic device, may cause the electronic device to, based on the intensity of the reflected light corresponding to the first distance less than the threshold distance, obtain the reliability.

For example, the one or more programs, when executed by the processor of the electronic device, may cause the electronic device to, based on identifying the intensity of the ambient light, identify the threshold distance indicating a maximum value of the first distance measurable using the laser sensor.

For example, the one or more programs, when executed by the processor of the electronic device, may, using the first image that is the image, obtain a second image in which at least one of pixels included in the first image is changed. The instructions, when executed by the processor, may cause the electronic device to identify the second distance based on identifying a phase difference between the first image and the second image.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101) comprising:
a camera module (180) including a lens assembly (210; 331);
a laser sensor (341);
a processor (310), and
memory (130) storing instructions, wherein the instructions, when executed by the processor, cause the electronic device to:
using the laser sensor in a first state outputting laser light (410), identify a first distance (460) related to intensity of reflected light (420) for the laser light;
using the laser sensor in a second state different from the first state, identify a threshold distance (440) related to intensity of ambient light (430) directed to the laser sensor;
using an image (501) obtained from the camera module, identify a second distance (510) related to the image;
obtain a reliability for the first distance using the first distance and the threshold distance; and
based on the reliability less than or equal to a threshold reliability, adjust a position of the lens assembly using the second distance by controlling the lens assembly of the camera module.

2. The electronic device of claim 1,
wherein the instructions, when executed by the processor, cause the electronic device to:
based on identifying the second distance greater than the threshold distance, adjust the position of the lens assembly using the second distance.

3. The electronic device of claim 1,
wherein the instructions, when executed by the processor, cause the electronic device to:
based on identifying the second distance less than the threshold distance, maintain the position of the lens assembly.

4. The electronic device of claim 1,
wherein the instructions, when executed by the processor, cause the electronic device to:
based on identifying the second distance less than the threshold distance, adjust the position of the lens assembly to a preset position.

5. The electronic device of claim 1,
wherein the instructions, when executed by the processor, cause the electronic device to:
based on identifying the reliability greater than the threshold reliability, adjust the position of the lens assembly using the first distance and the second distance.

6. The electronic device of claim 1,
wherein the instructions, when executed by the processor, cause the electronic device to:
based on the intensity of the reflected light corresponding to the first distance less than the threshold distance, obtain the reliability.

7. The electronic device of claim 1,
wherein the instructions, when executed by the processor, cause the electronic device to:
based on identifying the intensity of the ambient light, identify the threshold distance indicating a maximum value of the first distance measurable using the laser sensor.

8. The electronic device of claim 1,
wherein the instructions, when executed by the processor, cause the electronic device to:
using the first image that is the image, obtain a second image in which at least one of pixels included in the first image is changed; and
identify the second distance based on identifying a phase difference between the first image and the second image.

9. A method of an electronic device comprising:
using a laser sensor (341) in a first state outputting laser light (410), identifying a first distance (460) related to intensity of reflected light (420) for the laser light;
using the laser sensor in a second state different from the first state, identifying a threshold distance (440) related to intensity of ambient light (430) directed to the laser sensor;
using image (501) obtained from a camera module (180), identifying a second distance (510) related to the image;
obtaining a reliability for the first distance using the first distance and the threshold distance; and
based on the reliability less than or equal to a threshold reliability, adjusting a position of the lens assembly using the second distance by controlling a lens assembly (210; 331) of a camera module (180).

10. The method of claim 9, wherein adjusting the position of the lens assembly comprises:
based on identifying the second distance greater than the threshold distance, adjusting the position of the lens assembly using the second distance.

11. The method of claim 9, wherein adjusting the position of the lens assembly of the camera module comprises:
based on identifying the second distance less than the threshold distance, maintaining the position of the lens assembly.

12. The method of claim 9, wherein adjusting the position of the lens assembly of the camera module comprises:
based on identifying the second distance less than the threshold distance, adjusting the position of the lens assembly to a preset position.

13. The method of claim 9, wherein adjusting the position of the lens assembly of the camera module comprises:
based on identifying the reliability greater than the threshold reliability, adjusting the position of the lens assembly using the first distance and the second distance.

14. The method of claim 9, wherein obtaining the reliability comprises:
based on the intensity of the reflected light corresponding to the first distance less than the threshold distance, obtaining the reliability.

15. A non-transitory computer-readable storage medium storing one or more programs,
wherein the one or more programs, when executed by a processor (310) of an electronic device (101), cause the electronic device (101) to:
using the laser sensor in a first state outputting laser light (410), identify a first distance (460) related to intensity of reflected light (420) for the laser light;
using the laser sensor in a second state different from the first state, identify a threshold distance (440) related to intensity of ambient light (430) directed to the laser sensor;
using the image (501) obtained from the camera module, identify a second distance (510) related to the image;
obtain a reliability for the first distance using the first distance and the threshold distance;
and
based on the reliability less than or equal to a threshold reliability, adjust a position of the lens assembly using the second distance by controlling the lens assembly of the camera module.
